Europäisches Patentamt

(19) European Patent Office

Office européen des brevets

(11) Publication number: **0 116 388**
**A2**

(12) # EUROPEAN PATENT APPLICATION

(21) Application number: **84300051.4**

(22) Date of filing: **05.01.84**

(51) Int. Cl.³: **G 02 F 1/13**

(30) Priority: **05.01.83 GB 8300115**

(43) Date of publication of application:
**22.08.84 Bulletin 84/34**

(84) Designated Contracting States:
**AT BE CH DE FR GB IT LI LU NL SE**

(71) Applicant: **NORSEM ELECTRONICS LIMITED**
**Level 1 Civic Centre**
**Hartlepool Cleveland, TS24 8BP(GB)**

(72) Inventor: **Gray, Norman**
**Stainton Grange Stainton Way**
**Stainton Middlesbrough Cleveland(GB)**

(74) Representative: **Virr, Dennis Austin et al,**
**URQUHART-DYKES & LORD New Exchange Buildings**
**Queen's Square**
**Middlesbrough, TS2 1AB(GB)**

(54) Display assembly.

(57) A liquid crystal display assembly includes a liquid crystal display and a driver circuit therefor mounted on a substrate, the substrate being provided with contacts which are the mirror image of the contacts on the liquid crystal display, the two sets of contacts being placed in register to effect interconnection therebetween.

Fig. 2

EP 0 116 388 A2

## DISPLAY ASSEMBLY

This invention relates to a display assembly, and in particular relates to a liquid crystal display assembly.

Liquid crystal displays are well known and are increasingly employed to give a digital read out for all types of measuring instruments, meters, and the like. Normal liquid crystal displays (LCD's) are available in the form of two sheets of glass with the liquid crystal fluid sandwiched therebetween, one sheet overlying the other, and the overlying edges carrying an etched-on conductor to which connecting pins, for example dual in-line pins, are mechanically attached so that the display can be electrically connected to its driving circuit. The connecting pins will normally connect into a printed circuit board (PCB) where they may be mechanically fixed and electrically connected by soldering using one of the known techniques. Or if a driving circuit incorporates other components, for example integrated circuits, these will normally also be provided with connecting pins to correspond with the printed circuit board. Owing to the large number of connections which need to be made to many integrated circuit components and LCD's, the use of connecting pins, which must be spaced apart, is the limiting factor in the degree of miniaturisation which can be attained.

Other forms of circuit construction are known in which a high degree of miniaturisation is possible, for example ceramic thick film hybrid circuits, but these are not used in conjunction with LCD's since the interconnection between LCD and the thick film hybrid circuit cannot be attained without losing much of the advantage of the miniaturisation of the thick film hybrid.

The invention seeks to provide an LCD assembly which overcomes or reduces the above disadvantages.

According to the present invention there is provided a liquid crystal display assembly which comprises a liquid crystal display and a driver circuit therefor mounted on a substrate, the substrate being provided with contacts which are the mirror image of the contacts on the liquid crystal display, the liquid crystal display being placed in register with the contacts on the substrate to effect interconnection therebetween.

The actual interconnection between the LCD and the substrate, which can be a ceramic thick film hybrid or other form of miniaturised hybrid circuit board, may be effected directly with the respective connectors in physical contact, or, preferably may be effected through an elastomeric conductor. Such elastomeric conductors, known as 'zebra strips', are known in themselves and comprise strips of elastomeric material divided into alternating conducting and insulating portions.

The contacts in the LCD may be on the display face of the LCD, in which case the substrate may have an aperture therein so that, when the LCD contacts and substrate contacts are placed in register, the display of the LCD is visible through the aperture. Alternatively, and preferably, the contacts are on the back of the LCD.

In a particularly preferred form of the present invention, the LCD is located within a bezel of plastics material, preferably a high grade engineering polymer such as polycarbonate, and the display of the LCD is visible through the plastics material. The contacts may then be on the back of the LCD and the bezel may be closed off by the substrate when the respective contacts are in register. It is then possible, if desired, to seal off the whole assembly, for example by using a so-called 'constructive' adhesive between the substrate and the bezel. The sealed assembly may be filled with dry nitrogen before sealing and in this way the life of the assembly, and in particular of the LCD and of any semiconductors and/or oxidisable conductor materials therein, are significantly extended.

The LCD in the assembly of the invention will be used without any mechanically attached connecting pins, the connections to the driving circuit being made directly to the etched contacts on the glass body of the LCD. The circuitry employed on the substrate will include a driver circuit for the LCD, and additionally such other circuitry as appropriate to the end use of the display in question, which could be, for example, a volt-or ammeter, a temperature recorder, a revolution counter, or the like.

The invention will be described further, by way of example, with reference to the accompanying drawings, in which:

Figure 1 is a plan view of an assembly in accordance with the invention;

Figure 2 is a section on line 2-2 in Figure 1;

Figure 3 is a sectional view of another embodiment of the invention;

Figure 4 is a plan view of a bezel which is a feature of another form of assembly according to the present invention; and

Figures 5 and 6 are end elevations and Figure 7 a front elevation of the assembly incorporating the bezel shown in Figure 4.

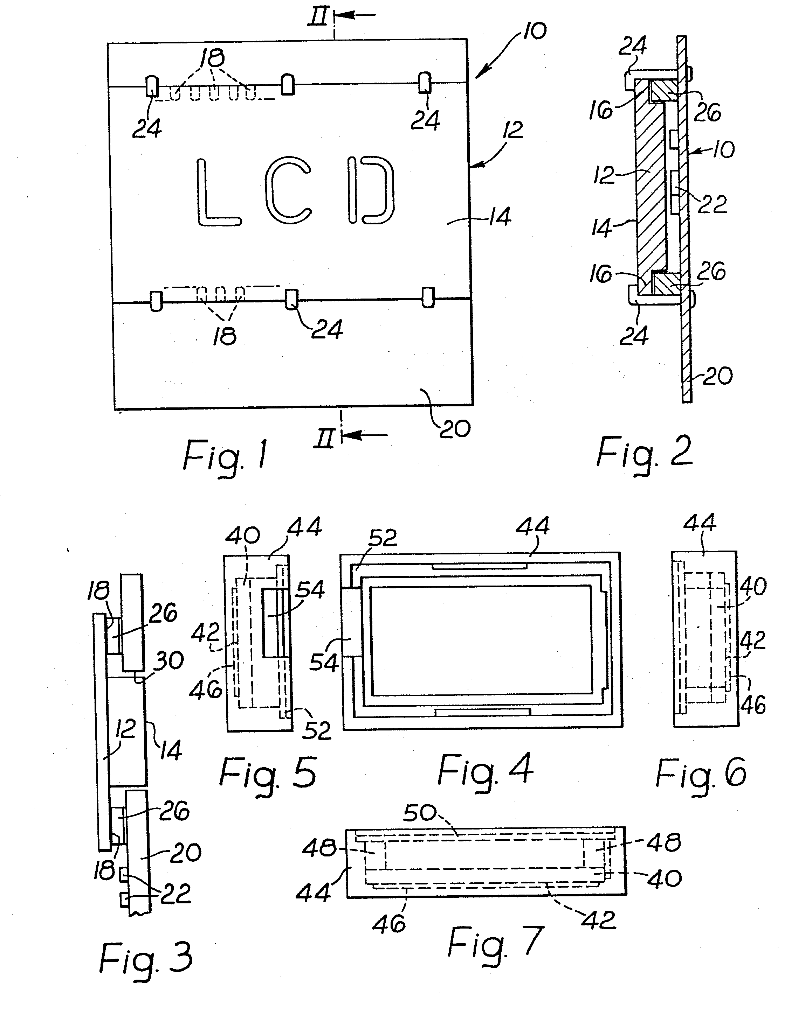

Referring to the drawings, Figures 1 and 2 illustrate an LCD assembly generally designated 10 which comprises a liquid crystal display unit 12 whose upper face 14 carries the visible display. A series of contacts or connectors are etched on the under side of the edges 16 of the display face 14. These connectors are indicated schematically in Figure 1 at 18.

A substrate 20, in this case a ceramic thick film hybrid circuit carrying other circuit components such as integrated circuit chips 22 is provided to which the LCD 12 is mechanically connected by means of clamps 24. The electrical connection is provided as follows. For each of the connectors 18 on the LCD 12 a mirror image connection is formed on the substrate 20 so placed that the LCD connectors 18 are in register with those formed on the substrate 20. Strips of elastomeric connector (zebra strips) 26 are then placed between the connectors 18 and the corresponding connectors on the circuit board 20. The zebra strips 26 are held in position by the mechanical pressure exerted by the clamps 24 on the LCD 12 and the zebra strips effect electrical connection between each of the connectors 18 and its respective connector on the circuit substrate 20.

The assembly described above enables an LCD display with full operating circuit to be produced in an extremely compact form. Indeed, using the preferred ceramic thick film hybrid circuitry for the substrate 20 the degree of miniaturisation achieved depends only on the desired size of the LCD display 14. This permits the assembly of extremely complex display modules combining high density with low weight and small volume, in contrast to previously available LCD circuitry.

Figure 3 illustrates another embodiment of the invention and like numerals are used to denote like parts. In this case the LCD 12 is formed with its display face 14 on the underside and its connectors 18 on the opposite face. The substrate 20 which can be a thick film hybrid as before, or other form of printed circuit, is formed with cut out 30 which receives the display face 14 of the LCD 12. The substrate contains connections as before the mirror image of those 18 on the LCD 12 and may be connected through zebra strips26. In this case the LCD would be mechanically held in place by clips or clamps, for example similar to those 24 in Figures 1 and 2. Alternatively, the connectors 18 may be bonded directly to the mirror image connectors on the substrate 20 using a conductive adhesive which will both mechanically and electrically connect the LCD directly to the substrate 20. As can be seen from Figure 3, in this embodiment of the invention, the display 14 is completely flush with the plane under-surface of the substrate 20 presenting an uninterrupted surface containing the display which is desirable for many applications.

The invention is particularly applicable to hybrid assembly techniques where components are attached to both surfaces of the substrate.

Referring now to Figures 4 to 7 of the drawings, an LCD 40 is located, with its display face 42 downward, within a polycarbonate bezel 44. The bezel is recessed at 46 to avoid pressure on the display face 42.

The LCD 40 is retained in place by elastomeric connectors 48, which also provide the electrical interconnection between the contacts (not shown in Figures 4 to 7) on the back face of the LCD 40 and the mirror image contacts (also not shown) on the adjacent face of a ceramic hybrid circuit 50 which fits into a recess 52 in the bezel 44. Connection of the assembly into associated circuitry is made through a cut out 54 in the end of the bezel.

- 8 -

The form of the invention typically illustrated in Figures 4 to 7 is particularly suited to the production of extremely small LCD assemblies, for example of the order of 15 millimeters maximum dimension, but is also readily adapted to the production of assemblies much larger than this, for example 50 to 100 millimeters square.

CLAIMS

1.      A liquid crystal display assembly characterised in that it comprises a liquid crystal display, a driver circuit for said display mounted on a substrate, the liquid crystal display having contacts on one face thereof and the substrate having contacts which are a mirror image of said liquid crystal display contacts, the contacts on the substrate and on the liquid crystal display respectively being placed in register with each other to effect interconnection between them .

2.      A liquid crystal display assembly according to claim 1, characterised in that the respective contacts are in direct physical contact.

3.      A liquid crystal display assembly according to claim 1, characterised in that the respective contacts are interconnected through an elastomeric conductor.

4.      A liquid crystal display assembly according to any of the preceding claims, characterised in that the contacts on the liquid crystal display are on the front face thereof and that, when the liquid crystal display and the substrate are interconnected, the display is visible through an aperture in the substrate.

5.      A liquid crystal display assembly according to any of claims 1 to 3, characterised in that the contacts on the liquid crystal display are on the rear face thereof.

6. A liquid crystal display assembly according to claim 5, characterised in that the liquid crystal display is located within an at least partially transparent plastics surround with the display visible through a transparent part of said surround.

7. A liquid crystal display assembly according to claim 6, characterised in that the plastics surround is closed by the substrate so as to contain the assembly within the surround.

8. A liquid crystal display assembly according to claim 6, characterised in that the closed plastics surround is sealed against passage of gases by means of a constructive adhesive between the substrate and the surround.

9. A liquid crystal display assembly according to claim 8, characterised in that the sealed surround is filled with nitrogen.

10. A liquid crystal display assembly according to any of claims 6 to 9, characterised in that the plastics surround is made of polycarbonate.

11. A liquid crystal display assembly according to any of the preceding claims, characterised in that the substrate is a ceramic hybrid circuit board or other miniaturised hybrid circuit board.

Fig. 1

Fig. 2

Fig. 3

Fig. 4

Fig. 5

Fig. 6

Fig. 7